# EUROPEAN PATENT APPLICATION

(11) **EP 3 907 603 A2**
(43) Date of publication of application: **10.11.2021**
(21) Application number: 21168471.7
(22) Date of filing: 15.04.2021
(51) Int. Cl.: G06F 8/60

(54) **SYSTEM AND METHOD INVOLVING MULTIPLE SOFTWARE TARGETS PACKAGED INTO ONE FILE**

(30) Priority: 05.05.2020 US 202016867195
(71) Applicant: Caterpillar Inc., Peoria, IL 61629-9510 (US)
(72) Inventor: Breitkreutz, Travis, Mapleton, 61547 (US); Karra, Satyavani, Delaware, 43015 (US); Urbanc, Marty, Edelstein, 61526 (US); Ebenezer, Christina, Chatham, 07928 (US); Rule, Jeffrey, Peoria, 61614 (US)
(74) Representative: Boult Wade Tennant LLP

(57) **Abstract**

A system and method of building a package for software targets in a flash memory. Each software target can be identified by a unique identifier and include an image for encoded information. The method can include generating a target specification file for each of the software targets (S603), generating a package specification file (S803) that includes a work order containing work order information indicating an installation process for the software targets, and building a package (S819) that includes the software targets, the target specification files, and the package specification file. The method can also include flashing (S1119; S1211), in the flash memory, a software target in accordance with the installation process and a respective installation command.

## Description

### Technical Field

The present disclosure relates to a system and method of managing different application targets and installing and updating them in a flash memory.

### Background

Conventional work machines can be configured with at least one Engine Controller, which may be more generally referred to as an Electronic Control Unit (ECU), to control various opertions of the work machine, such as engine speed and gear speed, to provide status information, and to perform equipment calibration. The ECU may be or include a microcontroller that contains one or more CPUs (processor cores) along with program memory and programmable input/output peripherals. Program memory is typically in the form of flash memory included on the same chip as the CPUs. For purposes of this disclosure, flash memory that is included on the microcontroller chip is referred to as an embedded flash memory. The term embedded as used herein means fixedly contained in.

However, using embedded flash memory in the ECU of work machines can have many challenges. Work machines are continually expanding in number and types of software applications, and may be used in areas requiring operation manuals and display data in different natural languages. The operating system and boot of the ECU may evolve and require updating. With the growth in number and types of applications and natural languages, the size of a flash file may increase to a point that the installation or updating of the entire flash file becomes impractical.

Flash memory of controllers in conventional work machines, unlike other forms of memory such as hard disk drives or solid state memory devices found in many computer systems, typically include erase commands that erase the entire embedded flash memory. Furthermore, the ECU of conventional work machines may not have a file system, may be limited to a single memory map, and may be without memory management facilities.

Recently, flash memory chips have been developed that are divided into several sectors. A sector is a portion of the flash memory device that can independently erased. For purposes of this disclosure, the term sector is used interchangeably with partition. A benefit of having sectors is that the flash memory chip is sector-erasable, meaning that one sector can be erased at a time. Flash memory chips divided into sectors require specific code for control of storing and erasing control software. For example, some microcontrollers provide an additional ROM area containing code for handling flash programming.

Software packaging and distribution is commonly used to provide software for end users to install on a computer system. U.S. Patent No. 6,675,382 ("the '382 patent") describes a package that is created by compressing and storing required software files into a single file. According to the '382 patent, an archive format can be used to create the package. The '382 patent also describes that the package is comprised of a payload file that includes the software files, and a control file that contains control information pertaining to those files and their dependencies. Queries may return information related to software requirements such as a package's name, release version, path of storage, size, dependencies, and maintainer. Embodiments are described as including automatic association of a package with a manifest file upon creation. A manifest file, for example, can contain a list of all files contained in the payload file that make up the package, their names, the directory they are stored in, dependencies there between, and other pertinent information necessary to access and manipulate these files.

However, in addition to the challenges of using embedded flash memory, the task of installing and updating multiple applications of different types as well as accounting for multiple natural languages, can be daunting, especially for a fleet of work machines. For instance, different groups of developers may be responsible for developing and managing different features of application targets that are to be installed on the same controller. Coordination and integration between the different developers and software targets may not be seamless.

### Summary

In one aspect, a method of building a package for a plurality of software targets in a flash memory of a controller in a work machine can be implemented, wherein each said software target is identified by a unique identifier, and wherein each said software target includes at least one data image that contains encoded information. The method can include generating, using a file generation circuitry, a target specification file for each of the software targets, wherein the target specification file indicates a command to be performed and the unique identifier of the respective software target; generating, using a file specification circuitry, a package specification file that includes at least one work order containing work order information that indicates an installation process for the software targets; and building, using a package building circuitry, a package that includes the software targets, the target specification files, and the package specification file.

In a second aspect, a method of updating embedded software having multiple software targets in a flash memory having a plurality of partitions can be implemented. The method of updating embedded software can comprise receiving, using a processor, an updated target program of the multiple software targets of the embedded software; generating, using the processor, a target specification file for the updated target program, wherein the target specification file indicates a command to be performed for the target program; generating, using the processor, a target manifest file for the updated target program, wherein the target manifest file indicates transmission security information for the target program; generating, using the processor, a package specification that includes a work order containing work order information indicating an installation process for the updated target program; and building, using the processor, a package that contains the package specification, the target specification file, the target manifest file, and the updated target program.

In a third aspect, a non-transitory computer-readable storage medium storing computer-readable instructions that, when executed by one or more computers, cause the one or more computers to perform a method of updating in a flash memory of a display target program in embedded software having multiple software targets can be provided or implemented. The method of updating the display target program can comprise receiving an updated display target program of the multiple software targets of the embedded software, wherein the updated display target program includes display content in a natural language; generating a target specification file for the updated display target program, wherein the target specification file indicates a command to be performed for the updated display target program; generating a target manifest file for the updated display target program, wherein the target manifest file indicates transmission security information for the updated display target program; generating a package specification that includes a work order containing work order information indicating an installation process for the updated display target program; building a package that contains the package specification, the target specification file, the target manifest file, and the updated display target program; extracting the updated display target program from the package; searching for a software display target to be updated that is stored in one of the partitions of the flash memory in accordance with the procedure; and storing the updated display target program in said one partition.

The foregoing general description of the illustrative embodiments and the following detailed description thereof are merely exemplary aspects of the teachings of this disclosure, and are not restrictive.

### Brief Description of the Drawings

A more complete appreciation of this disclosure and many of the attendant advantages thereof will be readily obtained as the same becomes better understood by reference to the following detailed description when considered in connection with the accompanying drawings, wherein:
FIG. 1 illustrates an exemplary work machine;
FIG. 2 illustrates a top evaluation view of an operator station of a work machine;
FIG. 3 illustrates an operator display device of a work machine;
FIG. 4 is a block diagram of a control system in accordance with an exemplary aspect of the disclosure;
FIG. 5 is a block diagram of a system for managing multiple control targets and installing and updating control targets for the control system of FIG. 4 in accordance with an exemplary aspect of the disclosure;
FIG. 6 is a flowchart for a method of building a target in accordance with an exemplary aspect of the disclosure;
FIG. 7 is a flowchart for a method of building a computer-based work order in accordance with an exemplary aspect of the disclosure;
FIG. 8 is a flowchart for a method of building a package in accordance with an exemplary aspect of the disclosure;
FIG. 9 is a flowchart for a method of processing a package in accordance with an exemplary aspect of the disclosure;
FIG. 10 is a flowchart for a method of processing an instruction in accordance with an exemplary aspect of the disclosure;
FIG. 11 is a flowchart for a method of processing a work order in accordance with an exemplary aspect of the disclosure;
FIG. 12 is a flowchart for a method of processing an install-related command in accordance with an exemplary aspect of the disclosure;
FIG. 13 is a flowchart for a method of processing an uninstall-related command in accordance with an exemplary aspect of the disclosure;
FIG. 14 illustrates exemplary field types for a target specification in accordance with an exemplary aspect of the disclosure;
FIG. 15 illustrates exemplary field types for a signed info message for a target manifest in accordance with an exemplary aspect of the disclosure;
FIG. 16 illustrates exemplary field types for a work order specification in accordance with an exemplary aspect of the disclosure; and
FIG. 17 illustrates exemplary field types for a package specification in accordance with an exemplary aspect of the disclosure.

### Detailed Description

The present disclosure relates to a system and method of managing different application targets and installing and updating the different application targets in an embedded flash memory of a work machine, and more particularly to a build tool for building the different application targets as a single package, and a service tool for extracting from the package, installing and updating individual application targets in the embedded flash memory of the work machine.

The term flash memory orignated from a type of memory in which entire sections of memory can be erased quickly by applying voltage to a group of cells (i.e., erased in a flash). The embedded flash memory is a type of nonvolatile memory and may be used as program memory that stores the control software inside the controller. For purposes of this disclosure, control software stored in the program memory may be referred to as embedded control software. The embedded flash memory can be without a dedicated memory controller and, therefore, can rely on the ECU for control of storing and accessing the embedded control software in the flash memory. The embedded flash memory may be configured as one or more flash memory chips.

The embedded control software may include software applications and operating system software. In this disclosure, a software application or operating system software may be referred to as a target. A target may contain a part of a software application or operating system software. The target is typically distributed in a flash file. A flash file, also known as a package, is a general term for any file to be uploaded to an ECU and stored in the embedded flash memory of the ECU. A flash file or package may be in a compressed format, such as a Zip file. In the case of conventional work machines, a flash file or package may only contain one target. For purposes of this disclosure, the term target may also be used interchangeably with software target.

A service tool is a software tool or a hardware tool that can (1) read the flash file or package to extract the target and (2) install the target into the embedded flash memory of the controller. The service tool can perform programming, also known as flashing. Programming (or flashing) generally includes uploading a target from a flash file to an ECU. A boot or operating system (OS) resident in the ECU can store the target into memory and prepare the target for use.

In this disclosure, the term natural language refers to a language that is written and spoken by a group of people, such as Arabic, Chinese, English, French, German, Italian, Japanese, Korean, Russan, Spanish, to name a few. In this disclosure, a software application can be a computer program that includes a data image or a set of data images that can execute with an embedded environment of the work machine. A data image is an encoded representation of data to be programmed into an ECU.

Work machine, as the term is used herein, can refer to a fixed or mobile machine that performs some type of operation associated with a particular industry, such as mining, construction, farming, etc., and that operates between or within work environments (e.g., construction site, mine site, power plants, etc.). A non-limiting example of a fixed machine includes an engine system operating in a plant or off-shore environment (e.g., off-shore drilling platform). Non-limiting examples of mobile machines include trucks (e.g., off-highway trucks), cranes, earth moving vehicles, mining vehicles, backhoes, material handling equipment, farming equipment, marine vessels, aircraft, and any type of movable machine that operates in a work environment.

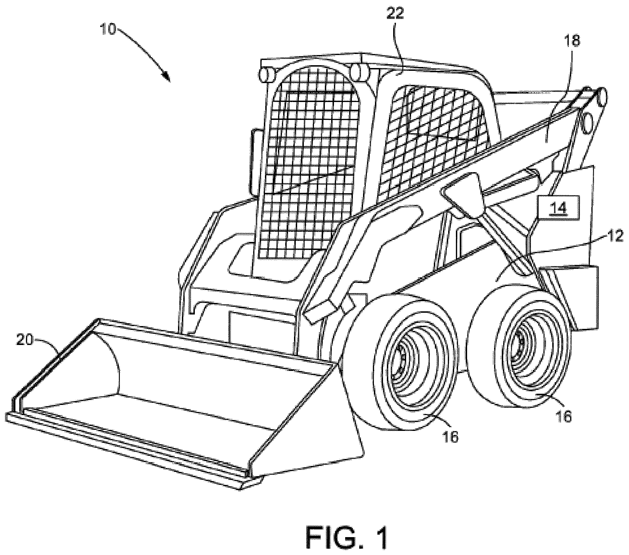

FIG. 1 illustrates an exemplary work machine 10. The work machine 10 may include a power source 14, a work arm 18 pivotably coupled with the frame 12, and a work implement 20 operatively coupled with the work arm 18. The work implement 20 may be configured to engage a material being worked on by the work machine 10. Although, the work implement 20 depicted in FIG. 1 is a bucket, another type of work implement 20 may be used, such as a blade, forks, a grapple bucket, or a front hoe.

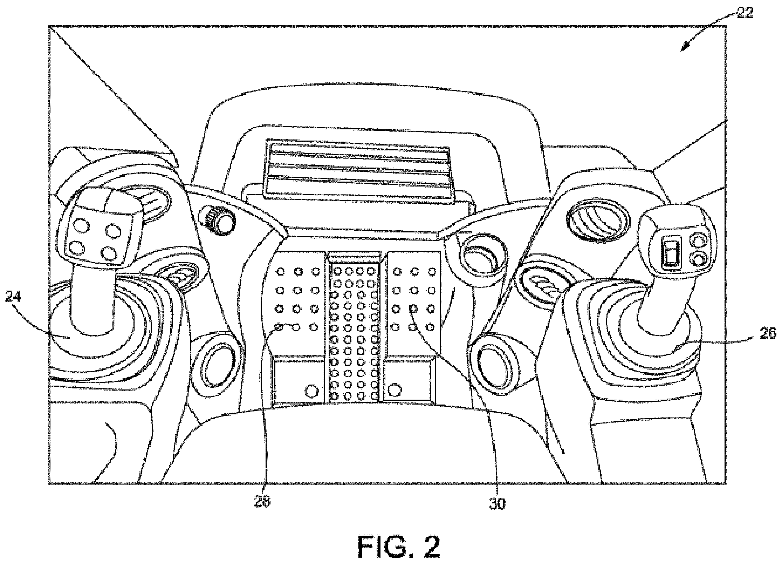

The work machine 10 may also include an operator station 22. One example of an operator station 22 that may be used in conjunction with the work machine 10 of FIG. 1 is depicted in the top evaluation view of FIG. 2. As is illustrated therein, the operator station 22 may include at least one or more control devices, such as a first joystick 24, a second joystick 26, a first foot pedal 28, and a second foot pedal 30. The control devices may be configured to regulate movement of at least one of the ground engaging member 16, the work arm 18, and the work implement 20.

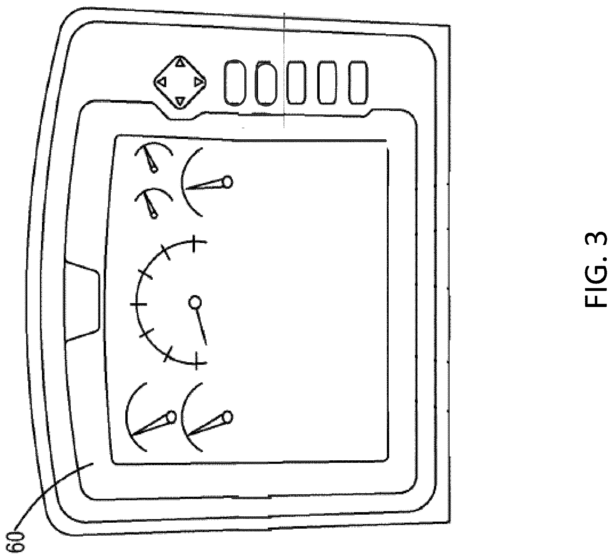

The work machine 10 may also include, in the operator station 22, at least one operator display device 60, such as shown in FIG. 3. The operator display device 60 may display information and data in graphical and/or text format. Optionally, the operator display device 60 may have one or more portions configured as a graphical user interface (GUI), such as a touchscreen, to receive inputs from an operator of the work machine 10. According to embodiments of the disclosed subject matter, displays on the operator display device 60 can be provided or controlled via a display target program in embedded software of the work machine 10.

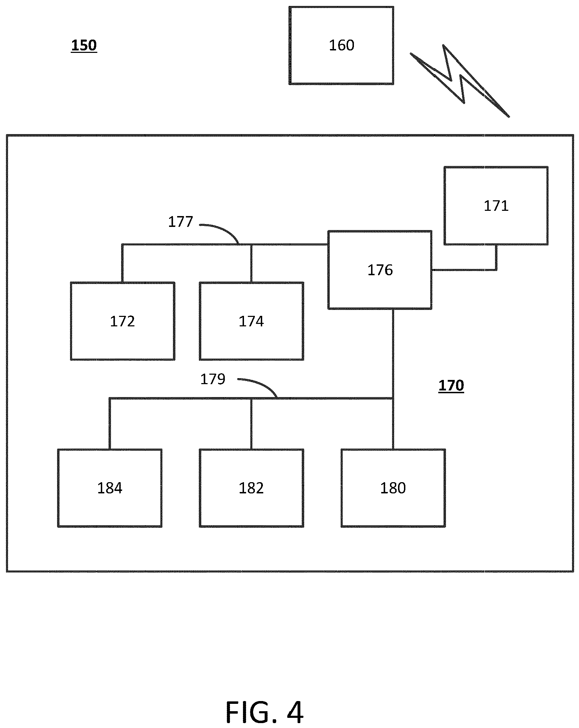

FIG. 4 illustrates an exemplary system 150 in which features and principles consistent with certain disclosed embodiments may be implemented.

As shown in FIG. 4, system 150 may include an off-board system 160 and a work machine 170, which can include a communication circuitry 171, an interface control system 176, and on-board circuitry 172, 174, 180, 182, 184, respectively connected to the interface control system 176 via primary and secondary on-board data links 177 and 179. Work machine 170 may corresponding to work machines discussed above, such as work machine 10.

Although interface control system 176 is shown as a separate entity, some embodiments may allow interface control system 176 to be included as a functional component of one or more of on-board circuitry 172 and 174, for instance. Further, although only a specific number of on-board circuitry are shown, work machine 170 may include any number of such circuitry. Each on-board circuitry 172, 174, 180, 182, 184 may be or include an Electronic Control Unit (ECU), or may be connected to a central ECU of the work machine 170 (not expressly shown).

An on-board circuitry, as the term is used herein, may represent any type of component operating in a work machine that either controls other components or is controlled by other components or sub-components. For example, an on-board circuitry may be an Electronic Control Unit (ECU), as discussed above, an operator display device, an Engine Controller, a power system control circuitry, a Global Positioning System (GPS) interface device, an attachment interface that connects one or more sub-components, or any other type of device work machine 170 may use to facilitate operations of the work machine 170 during run time or non-run time conditions (i.e., machine engine running or not running, respectively).

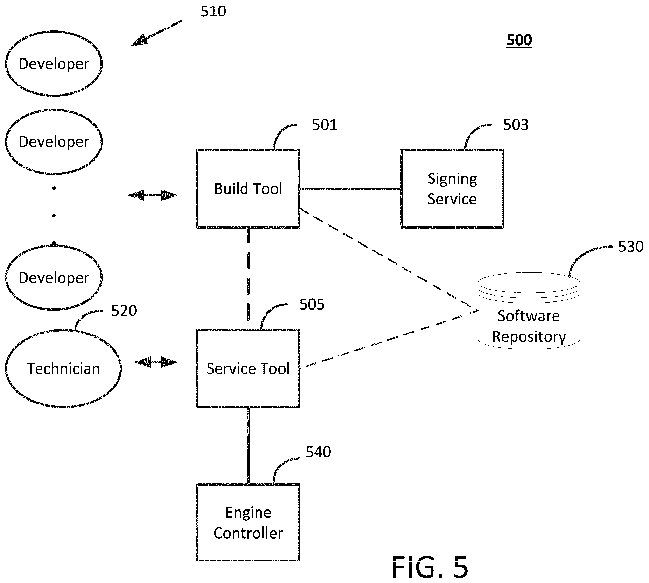

FIG. 5 is a block diagram of a system 500 for managing multiple control targets and installing and updating the control targets for the control system of FIG. 4 in accordance with an exemplary aspect of the disclosure. The system 500 can include a controller or control circuitry, such as an Electronic Control Circuitry 540, a build tool 501, a signing device 503, a service tool 505, and a repository 530. For purposes of simplicity of description, the Electronic Control Circuitry 540 will be described as a single ECU. However, it should be understood that the ECU 540 may be one of a plurality of ECUs in work machine 170. According to an aspect of the present disclosure, ECU 540 can have embedded flash memory.

The ECU 540 may be configured with a plurality of control targets, including, but not limited to, specific language software for display, machine health display, telematics, payload, a flash vision or object detection system, controls for emissions or regulatory, as well as the operating system for the ECU 540. Some control targets may require certification, such as controls for emissions or regulatory.

A software target can provide functionality that is directly observable or serviceable by an end user. Throughout this disclosure, the term software target is used interchangeably with control target, each referring to embedded software for a controller or control circuitry. Different software parts or applications as types of software targets are typically developed by multiple programming groups or departments 510.

Once all programming groups or departments 510 have completed development of their software part or application for a work machine 170, the build tool 501, which can be a component of the off-board system 160, and which may be referred to as a remote computer device, may be used to build a control target for each software part or application. In some embodiments, the build tool 501 can build a single flash file or package that includes multiple control targets. In some embodiments, the build tool 501 may build a flash file or package for a subset of control targets, where only some of the control targets may be updates or replacements for existing control targets.

The flash file or package that is built using the build tool 501 can be provided to a work machine, such as work machine 170, which may be located remotely from the location of the build tool 501. Because of this transfer between locations, there is a chance that the contents of the flash file or package may become corrupted. Also, it is possible that the contents of the flash file or package may become corrupted during installation of the targets at the work machine 170. Hence, a signing service 503 may be used to perform security functions to ensure integrity through transmission of one or more data images. In some embodiments, the signing service 503 may generate a digital signature for each target manifest file for storing with each associated target manifest file. In some embodiments, the signing service 503 may be performed by the same processor or processing circuitry as the build tool 501, or may be performed in a separate computer system.

The service tool 505 can be a specialized tool for installing a flash file or package in an embedded flash memory of the ECU 540. In some embodiments, the build tool 501, the signing service 503, and the service tool 505 may all be performed or implemented by the same processor or processing circuitry. For example, the build tool 501, the signing service 503, and the service tool 505 may be software programs that are executed in a personal computer. In some embodiments, the build tool 501 may be performed in a computer system situated at a location that is remote from the computer system performing the functions of the service tool 505.

The service tool 505 can both query targets in a system and install targets in the system, such as the ECU 540 of the system 500 (or each of the on-board circuitry 172, 174, 180, 182, 184 of work machine 170). The service tool 505 may be contained in the off-board system 160. The build tool 501 and the service tool 505 may be part of the same off-board system 110, or may be contained in separate off-board systems 160. The service tool 505 may provide a graphical user interface for a service technician 520. The user interface may render and display an HTML (Hyper Text Markup Language) file to present a table of contents that presents a list of links to content descriptions for targets. A content description is an HTML file that provides information about a target to service technician 520 to help the technician determine whether to install the target on the ECU 540.

Examples of service tools include a proprietary Electronic Technician (ET) service tool, and a remote servicing tool. Generally, the Electronic Technician (ET) service tool is a diagnostic software to communicate, diagnose, and service electronically controlled proprietary machines (e.g., an engine). When connected to an Electronic Control Circuitry, the service technician 520 has the ability to diagnose existing and potential problems, configure the product, and obtain data for analysis. The ET service tool can display parameter status, display diagnostics, perform diagnostic tests, perform calibrations, display fuel consumption, and display operating hours.

### Industrial Applicability

As noted above, the present disclosure relates to work equipment that has programmable controllers that are programmed with embedded software, for example software for multiple targets such as applications, display software for different natural languages, and an operating system to be stored in Flash memory of the controller. As mentioned above, in the case of conventional work machines, a flash file or package may only contain one target. It may be desirable to develop and manage different application targets for the same controller. It may be desirable to develop display content, for example an electronic maintenance manual, in different natural languages. An end user can select one or more of the natural languages as the languages for display of the manual.

Embodiments of the disclosure can be applicable to work equipment that includes control targets such as telematics, payload, a vision system, and engine controls for emissions or regulatory. Embodiments of the disclosure can also be applicable to work equipment that includes display for Engine Speed, Gear Speed, a Status Screen, and Calibrations.

Over time, changes or updates may be made to one or more of the control targets, and in some cases, control targets may be deleted and replaced with new control targets. Embodiments include a build tool that is responsible for (1) for independent management of multiple control targets and building targets, (2) their associated target specification and target manifest files, and (3) for generating a package specification file into one package. Individual target specification files and target manifest files are uniquely identified so that they can be independently installed, updated and deleted. Machine readable work orders in the package specification file describe how to process each control target, including an order of installation of the control targets. Security is provided in the form of a digital signature stored in the target manifest files to be used to check for data corruption between building of the targets and installation in a flash memory. Embodiments include a service tool that is responsible for accessing, servicing, and updating a flash memory of a work machine. The service tool can independently install, read, update, and delete control targets in a flash memory having several partitions.

In some embodiments, a system in which a control target for language-specific display enables installing display software for different combinations of languages and application software. The system may enable several largely independent and possibly optional applications to be installed into the same ECU. The system may enable several separate but somewhat dependent applications to be installed into the same ECU. The system may enable updating of a non-emissions portion of engine software without affecting the emissions portion. This scheme allows for some engine software updates without having to go through the emissions certification process. The system may enable updating supporting processors inside the ECU separately from updating the application software on the main processor. The system may enable installing both an application and a separate configuration for that application.

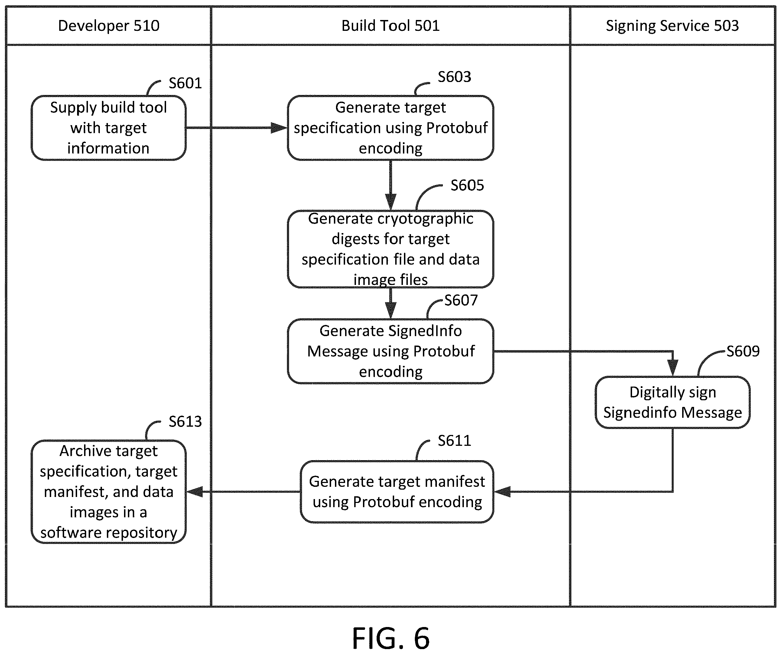

FIGs. 6 to 13 are flowcharts of a method of creating a package for multiple targets and programming, or flashing, multiple targets of the package in a flash memory having partitions of an ECU of a work machine.

FIG. 6 is a flowchart for a method of building a target in accordance with an exemplary aspect of the disclosure.

As mentioned above, the build tool 501 is a tool to be used by one or more developers 510 and/or departments (each with one or more developers 510) after development of a target is completed. The build tool 501 may be a software program that is executed in a computer system, such as a personal computer. The build tool 501 can generate specification files associated with the target, generate work orders, and combine and compress the specification files into a single package. In some embodiments, the build tool 501 may be a multiuser tool in a server, a data center, or a cloud service. Moreover, more than one developer 510 and/or department may have their own build tool 501, or may access a common build tool platform. For ease of understanding, the method in FIG. 6 is for a single target and a single build tool 501.

In S601, the build tool 501 can receive information for a control target that is input by a developer 510. Control target information may include some or all of the following: a flash memory command (e.g., INSTALL, UNINSTALL or UNINSTALL_ALL), a unique identifier for matching to a particular target, a human-readable name and/or version, the language provided in the target parts system identification, identification of the intended application and component, human-readable comments for additional information, applicable aftermarket brand names of ECU hardware types with which the target is compatible, permissible behavior when acting on the target, protection information for any software-enabled attachments, special instructions for handling certain data image files, data image files containing object code, executable code, configuration data, and other special data entities.

In S603, the build tool 501 can generate a target specification file using protocol buffer (Protobuf) encoding, for instance. Protocol buffer encoding (Protobuf) can be viewed, generally, as a method of serializing data. Such method can involve an interface description language that describes the structure of some data and a program that generates source code from that description for generating a stream of bytes that represents the structured data. Data structures (referred to as messages) and services can be described in a proto definition file and compiled with the protoc compiler. The proto definition file contains a schema that can be compiled by the protoc compiler to produce output for a particular programming language, such as C++, Java, C#, and Python. Thus, this compilation can generate code that can be invoked by a receiving end computer program.

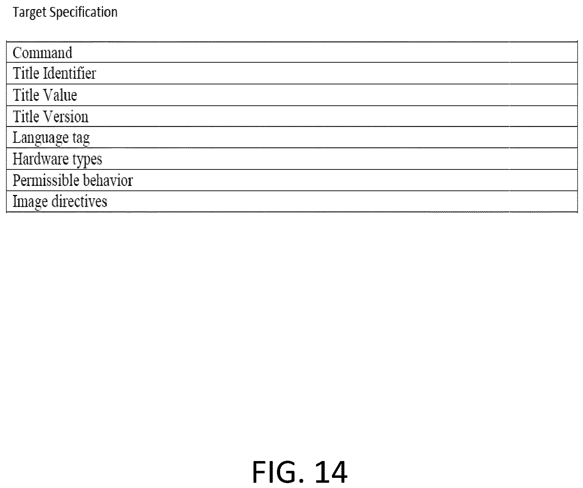

FIG. 14 illustrates exemplary field types for a target specification file. The target specification can represent information about a control target. The target specification file can be a protobuf file that provides target-related commands and information to both service tool 505 and the ECU 540. It also provides the ECU 540 with special directives for any number of associated data image files. The data image file can contain actual data to be programmed as part of a target within the ECU 540. The target specification can include the flash memory installation command, including one of INSTALL, UNINSTALL, or UNINSTALL ALL, that will be performed by the ECU 540 using the target. The target specification can also identify the target by a unique title identifier, a title value, and/or a title version.

In some embodiments, the unique title identifier is a Universally Unique Identifier (UUID), which is a 128-bit number that provides unique identification. The title value provides a human-readable name for a target that allows the service technician 520 to easily recognize the target. The title version field distinguishes one release version from all other release versions of a target. The language tag field identifies the natural language used in a language-supporting target. The hardware types field contains a listing of any number of hardware types for matching to an ECU's hardware type. The permissible behavior field defines which actions can be taken on the target once it exists in the ECU 540. Permissible behavior may include various combinations of create, delete, or update of a target. For example, a permissible behavior may be that a target cannot be created, deleted, or updated. Another example of permissible behavior is that a target may not be created or deleted, but can be updated. The image directives field contains a listing of any number of references to data image files requiring special treatment by the ECU 540. A directive field provides the instruction, optionally with parameter-value pairs as arguments, for how to treat the associated data image file.

In some embodiments, the target specification file is configured as a Protobuf file. However, the control target information may be arranged in other structures, such as a JSON file.

In S605, build tool 501 can generate cryptographic digests for the target specification file and data image files. A cryptographic digest is a value calculated across a sequence of bits or bytes using an algorithm designed to detect changes or alternations in the sequence. According to embodiments, the digest value changes with any change in the input sequence. The build tool 501 maps (performs a hash function) the target specification and data image files to the cryptographic digest that may be a fixed length hash, such as 128 bits. The hash function that is used to produce the hash can be a one-way function, i.e., cannot be inverted.

In S607, build tool 501 can generate a signed information message using protobuf encoding.

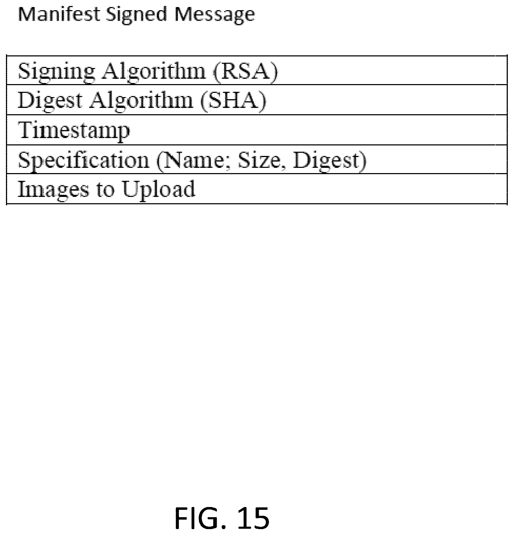

FIG. 15 illustrates exemplary field types for a signed info message for a target manifest. A Signed Information message contains the signing algorithm used to digitally sign the message, the algorithm used to calculate the digest of each file, a timestamp of the point just before the message was signed (for use when comparing the age of a target to other targets), and information about each data image file to be uploaded to the ECU 540. The signing algorithm may be a form of the RSA (Rivest-Shamir-Adleman) algorithm, and the digest algorithm may be a form of SHA (Secure Hash Algorithm). File information may include the following: Name of the file, Size in number of bytes of the file's contents, and calculated digest for the file.

In S609, signing service 503 can digitally sign the information message. The digital signature authenticates the message in order to prevent tampering of the message contents. A digital signature is a sequence of bits, calculated using a cryptographic algorithm, that is applied by a source to a piece of information, in this case the message. Recipients of this information can use the signature to verify both that the information came from the authentic source to confirm that the information has not been corrupted or tampered with. The signing service 503 may use any of several cryptographic algorithms for generating digital signatures, such as Digital Signature Algorithm (DSA) and RSA. In one embodiment, the signing service 503 may combine the message with a private key to create a digital signature on the message. The receiving end, including the service tool 505, will authenticate the message using a corresponding public key.

In S611, build tool 501 can generate target manifest file using protobuf encoding. A target manifest file ensures that the contents of the target are not altered before the target is received by the ECU. The target manifest file may contain the following items: The digital signature of the signed information message, a copy of the digital certificate containing the public key of the signing tool, encoded as DER (Distinguished Encoding Rules), a copy of the generated signed information message, encoded as protobuf.

In S613, developer 510 archives the target specification file, target manifest file, and data images in a software repository 530.

In order to enable independent installation and uninstallation of multiple software targets in partitions of a flash memory, a processing organization is set forth that includes one or more work orders which describe how to process each target.

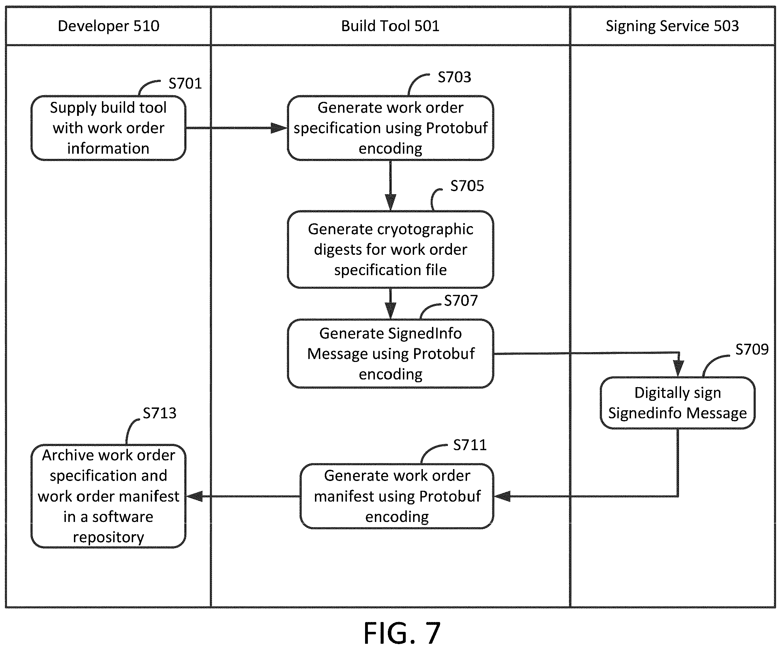

FIG. 7 is a flowchart for a method of building a computer-based work order in accordance with an exemplary aspect of the disclosure.

A work order file provides work order information indicating an installation process such a set of ordered steps specifying manner in which one or more target specifications are to be processed for a given ECU 540, or for given set of ECUs. According to some embodiments, each step in the set of ordered steps must be successful before a given work order to be considered successful. The work order acts as a single transaction, and thus the entire work order will be halted if a step in the work order is not successfully completed. The system may perform a rollback process if the transaction is unable to be completed.

In S701, developer 510 supplies build tool 501 with the work order information. Work order information may include the following: an ordered list of targets to be processed on an ECU 540 or a set of ECUs, i.e., the first target in the list must be processed first, the second target second, etc. There can be a target specification and associated target manifest files for each target in the list. A work order describes a transaction in the sense that if the ECU 540 experiences a failure when processing the work order, then it halts processing the rest of the work order and rolls back any targets processed up to the point of failure to the preinstallation state. This may include uninstalling any targets that were installed from the work order and, restoring older versions of installed targets.

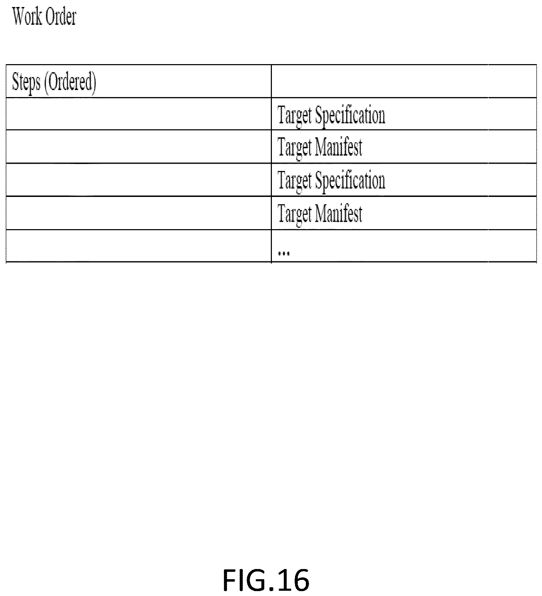

In S703, build tool 501 generates a work order specification file using protobuf encoding. FIG. 16 illustrates exemplary field types for a work order specification file. The work order specification file includes a steps field of pairs of target specification and target manifest files for every target, all encoded as protobuf inside the work order specification. The steps field contains an ordered listing of one or more steps to accomplish for the work order to be considered successful. One criteria for success is that all affected target specifications must have at least one hardware type in common.

In S705, build tool 501 generates cryptographic digest for the work order specification file.

In S707, build tool 501 generates a signed information message using protobuf encoding. The contents of the signed information message is described above.

In S709, signing service 503 digitally signs the information message. In one embodiment, the signing service 503 may combine the message with a private key to create a digital signature on the message. The receiving end, including the service tool 505, will authenticate the message using a corresponding public key.

In S711, build tool 501 generates a work order manifest file using protobuf encoding. A work order manifest file contains security information to ensure that the contents of the work order are not altered before being received by the ECU 540. It contains the same kind of security information as mentioned above for a target manifest file.

In S713, developer 510 archives the work order specification file and work order manifest file in the software repository 530.

Once targets, target specifications and manifests, and work order specifications and manifests are completed and stored in the software repository 530, a single package containing the targets, target specifications and manifests, and work order specifications and manifests can be built for distribution to work machines.

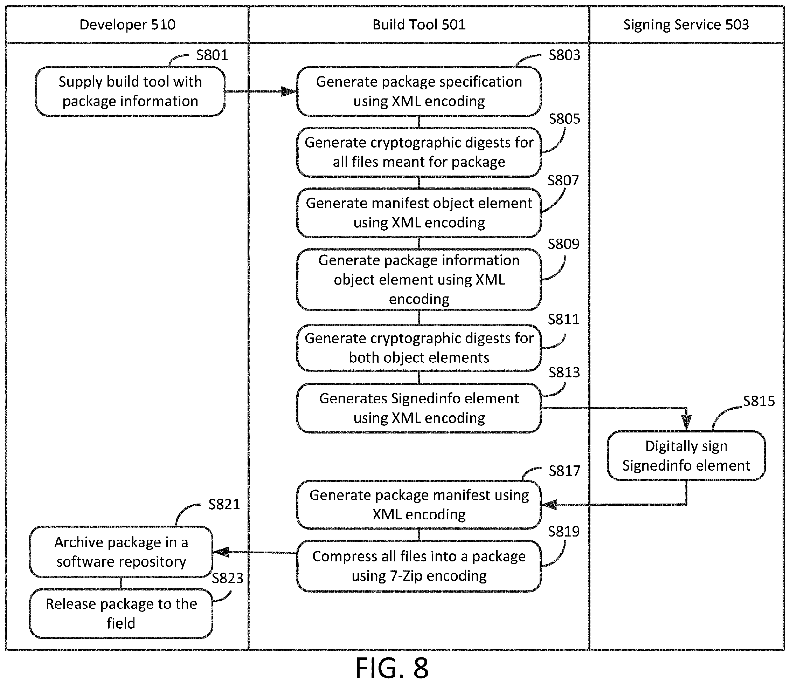

FIG. 8 is a flowchart for a method of building a package in accordance with an exemplary aspect of the disclosure.

In S801, developer 510 supplies build tool 501 with package information. Package information may include some or all of the following; parts system identification; human-readable content descriptions provided in HTML or other structured format, in multiple natural languages; work order specifications and work order manifests for work orders intended for the package; target specifications and target manifests for targets intended for the package; all data images for targets intended for the package; any other packages intended to be nested inside the package; and an ordered list of machine-readable instructions for how a service tool is to process the package contents.

In S803, build tool 501 generates a package specification file using a structured encoding, for example XML. Although the package specification is structured as XML, other encoding structures may be used, such as JSON.

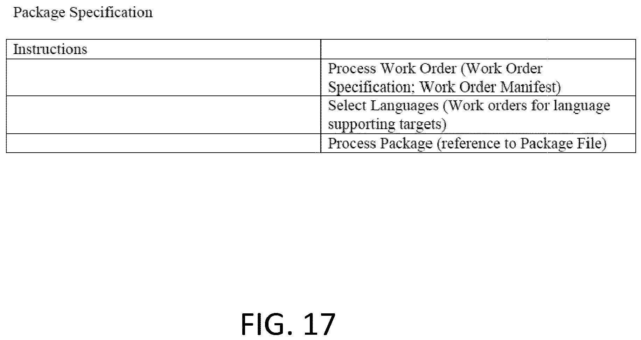

FIG. 17 illustrates exemplary field types for a package specification. The package specification includes at least a set of instructions. The set of instructions is an ordered collection of instructions that the service tool 505 must follow to successfully process the contents of the package. At least one process work order, select languages, or process package element should or must exist in the instructions. The process work order element provides links to a work order manifest file and its associated work order specification file. The select languages element is a collection of links to work orders for language-supporting targets to install. Upon encountering a select languages element, the service tool 505 presents to the service technician a list of languages to choose for installation. Once the technician 520 selects an appropriate number of languages to install, the service tool 505 proceeds with each selected process language work order element to process the separate work orders. The process package element provides a reference to a package file for the service tool 505 to process.

In S805, build tool 501 generates cryptographic digests for all files meant for the package.

In S807, build tool 501 generates a manifest object element using a structured encoding, for example XML. The manifest object element includes a list of all files to be included in the package together with their generated digests. Though XML is used as the encoding structure, other encoding structures for a list of items may be used, such as JSON.

In S809, build tool 501 generates package information object element using XML encoding.

The package information object element may include the following information: The name and version of the tool used to create the package; additional information about the invocation of the tool; a timestamp of the point just before the object element's digest was generated.

In some embodiments, security measures are taken to ensure that each software target reaches the flash memory without being corrupted. Also, since the build tool 501and the service tool 505 may be used by different entities, security measures may be taken to ensure that the target software received at the service tool 505 was provided from the build tool 501 that created the package.

In S811, build tool 501 generates cryptographic digests for both object elements (manifest object element, package information object element).

In S813, build tool generates a signed information element using XML. A signed information element contains references to the generated manifest object and package information object elements together with their respective generated digests. It also contains the algorithm used to sign the signed information element.

In S815, signing service 503 digitally signs the information element. A signed information element contains references to the generated manifest object and package information object elements together with their respective generated digests. It also contains the algorithm used to sign the signed information element.

In S817, build tool 501 generates a package manifest file using a structured encoding, for example XML. A package manifest file ensures that the contents of the package are not altered before being processed by a service tool. It may contain the following items: the digital signature of the signed information element, for example, encoded as Base64; a copy of the digital signature containing the public key of the signing tool, for example encoded as Base64; a copy of the signed information element; a copy of the manifest object element; a copy of the package information object element.

In S819, build tool 501 compresses all files into a package using any file compression scheme, for example ZIP encoding using 7-zip.

In S821, developer 510 archives the package in the software repository 530.

In S823, developer 510 releases the package to the field. For purposes of this disclosure, the field can be a set of work machines containing ECUs that are to receive the applications and languages in the targets included in the package.

The package may be distributed to all work machines 170 of a certain type, or to specific work machines 170. The package may be distributed electronically over a wireless network, or distributed via a computer-readable medium.

A service technician 520 may use a service tool 505 to install or uninstall a package in a particular ECU 540. The service tool 505 verifies a package and extracts information from the package. The service tool 505 then performs flashing, also referred to as programming of a flash memory.

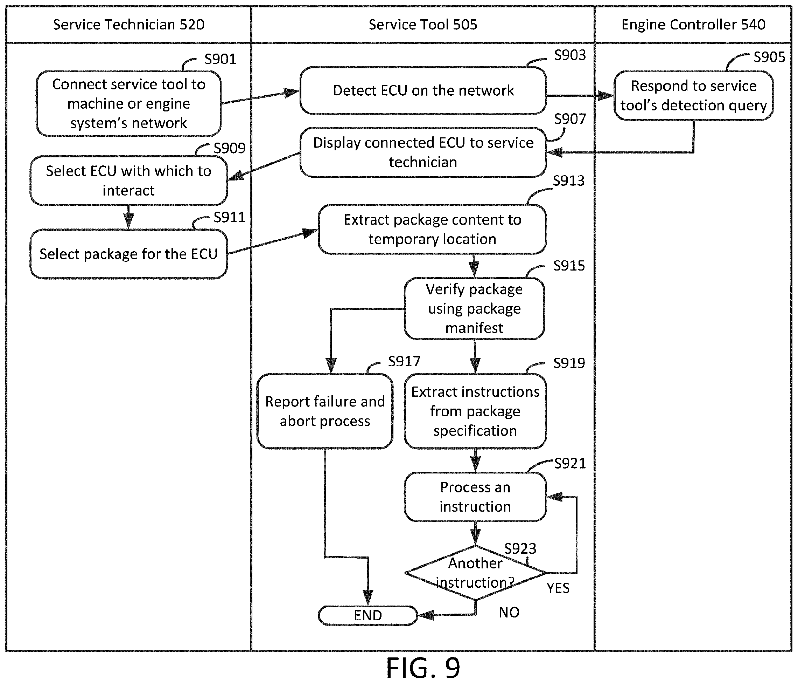

FIG. 9 is a flowchart for a method of processing a package in accordance with an exemplary aspect of the disclosure.

In S901, service technician 520 connects service tool 505 to a machine or engine system's network. The connection may be by way of a physical electrical connection, such as through a USB cable, or may be a wireless connection, by way of WiFi or Bluetooth, to name a few.

In S903, service tool 505 detects one or more ECUs 540 on a network of the work machine 120 using a detection query message.

In S905, the ECUs respond to the service tool's 505 detection query.

In S907, service tool 505 displays a list of connected ECUs 540 in a user interface for the service technician 520. In some embodiments, the user interface is one that is displayed by a display device configured to render HTML. In other embodiments, the user interface is one that displays a markup language, such as XML or other Standard Generalized Markup Language (SGML). In still other embodiments, the user interface is one that displays a file format, such as Portable Document Format (PDF), Microsoft Word, or other text or graphic file.

In S909, an ECU with which to interact is selected.

In S911, service technician 520 selects the package for the ECU.

In S913, service tool 505 extracts package content to a temporary location.

In S915, service tool 505 authenticates the package using security information in the package manifest. If the package authentication is successful, then the flow proceeds to block S919, otherwise the flow proceeds to block S917. The package authentication comprises the following steps:
1. Extract and verify the digital certificate.
2. Extract the signed information element and verify it using the digital signature.
3. Extract the manifest and package information object elements and verify their digests.
4. For each file in the package, verify its corresponding digest.

In S917, if the package cannot be verified, service tool 505 reports failure and aborts the process being performed by the service tool 505.

In S919, when the package is verified, service tool 505 extracts instructions from package specification file.

In S921, service tool 505 processes an instruction extracted from the package.

In S923, service tool 505 continues processing instructions iteratively until each instruction is executed (NO in S923). The process ends when all the instructions are executed by the service tool 505.

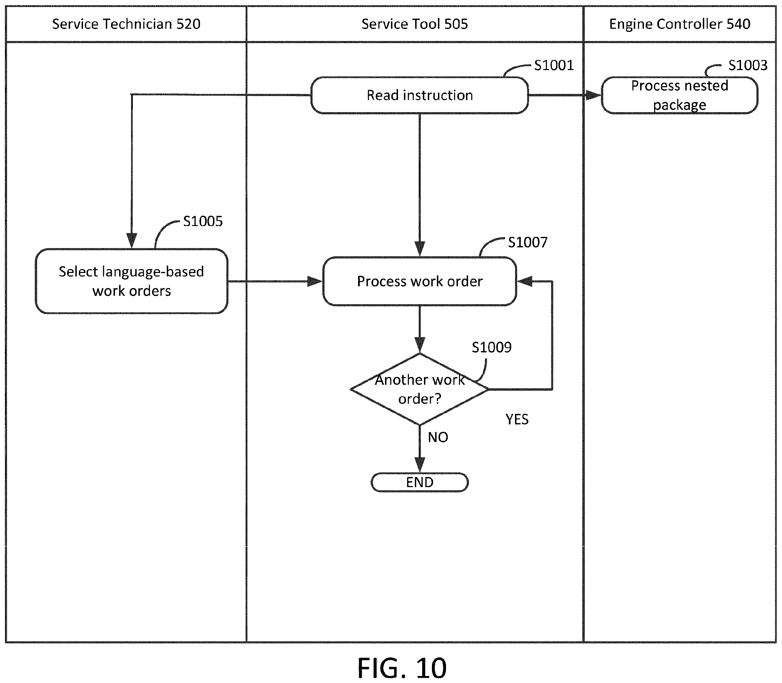

FIG. 10 is a flowchart for a method of processing an instruction in accordance with an exemplary aspect of the disclosure. The method of processing instructions is a more detailed description of step S921 of FIG. 9.

In S1001, service tool 505 reads an instruction.

In S1003, ECU 540 processes a nested package. Packages may contain other nested packages, and an instruction to process a package means that the service tool will handle the nested package in the same manner that it would handle a package that had been selected by the service technician at the beginning of the flowchart of FIG. 9. In some embodiments, a package may include software targets for various display parts in different natural languages.

In S1005, service technician 520 may select language-based work orders for specific natural languages. An instruction to select languages includes a display that allows the service technician 520 to select a set of languages to install into the ECU. Because selection of languages occurs after the package has been built, each language-based target exists in its own language-based work order. The service tool 505 will process each selected language-based work order separately.

In S1007, service tool 505 processes a language-based work order.

In S1009, the service tool 505 continues to iteratively process work orders until there are no work orders remain unexecuted (NO in S1009), for example, language work orders.

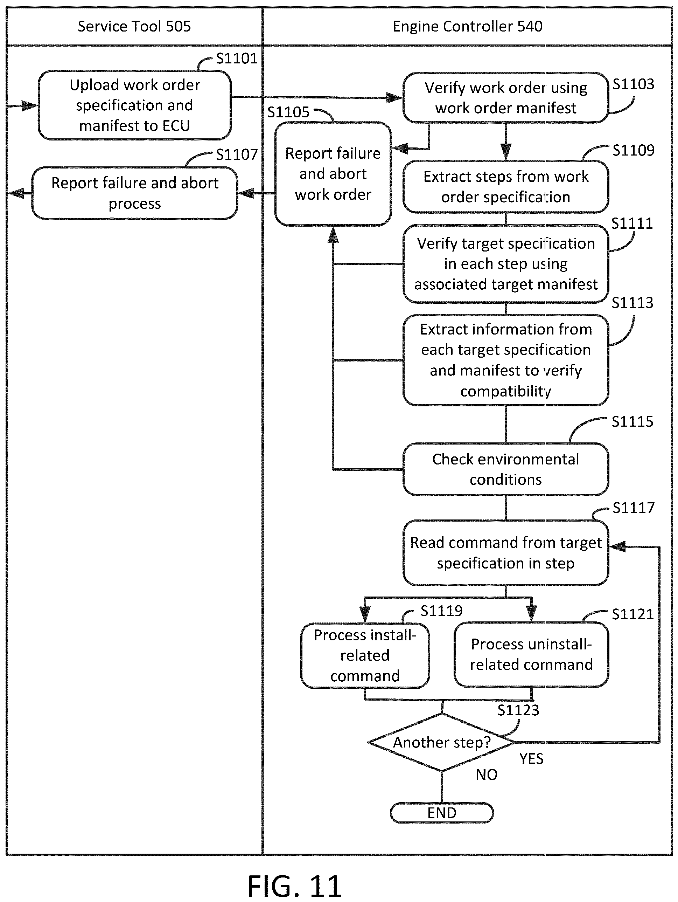

FIG. 11 is a flowchart for a method of processing a work order in accordance with an exemplary aspect of the disclosure. FIG. 11 is a more detailed explanation of S1007 of FIG. 10.

In S1101, service tool 505 uploads a work order specification and its associated manifest to ECU 540.

In S1103, ECU 540 verifies the work order using information contained in the work order manifest. Work order verification involves the following steps:
1. Extract and verify the digital certificate.
2. Extract the signed information message and verify it using the digital signature.
3. For the work order specification, verify its corresponding digest.

In S1105, when the work order cannot be verified, ECU 540 reports failure and aborts work order. In S1107, service tool 505 reports failure and aborts processing according to the work order.

In S1109, when the work order is verified, ECU 540 extracts instruction steps from work order specification.

In S1111, ECU 540 verifies a target specification in each step using associated target manifest. Initial verification of each target in the list involves the following steps:
1. Extract and verify the digital certificate.
2. Extract the signed information message and verify it using the digital signature.
3. For the target specification, verify its corresponding digest.

Final verification of each target will only occur once the target's data image files (if any) are uploaded.

In S1113, ECU 540 extracts information from each target specification and manifest to verify compatibility.

The ECU 540 checks the following conditions for compatibility:
If aftermarket brands are present in the specification, then one brand must match that of the ECU.

If ECU hardware types are present in the specification, then one type must match the type of the ECU.

In some embodiments, the software target's permissible behavior aligns with the intended action, e.g., if the command is to uninstall, then the permissible behavior allows uninstallation. Additionally, if the target specification is updating an existing installed target, then the permissible behavior in the specification is the same as that of the installed target.

If software-enabled attachment protection is present, then the protection provided should or must match what the ECU 540 supports. Software-enabled attachment protection is separate from data image directives. A software-enabled attachment is a feature inside an installed target that has been enabled (turned on) via a process that is entirely separate from flashing. Software-enabled attachment protection, in contrast, must be checked before flashing because installing a target that is incompatible with the software-enabled attachments may turn off or even remove the existing software-enabled attachments. (Restoring the attachments would require both reflashing old software and going through the process to enable the attachments.) For example, any special directives for data images must be supported by the ECU 540. All data images listed with special directives are also listed in the target manifest, the names of associated data image files must not overlap with the names of data images from other installed targets, and/or the aggregate size of associated data image files cannot exceed available memory. Special directives for data images provide information to the ECU 540 regarding the disposition of the referenced data images. For example, we use a media directive together with the data images for a language-supporting target to tell the ECU 540 that the media data images must be placed in a different partition. Other directives, for example, an FPGA, can be used to indicate that the associated data image needs to be flashed into the separate FPGA chip, and a kernel can be used to indicate that the associated images are meant to be stored in the kernel area.

In S1115, ECU 540 checks environmental conditions.

Environmental condition checks may include some or all of the following: Transmission not in neutral Engine speed, detected Implement hydraulics, engaged Battery voltage too low.

In S1117, ECU 540 reads command from the target specification.

In S1119, ECU 540 processes an install-related command.

Alternatively, in S1121, the ECU 540 processes an uninstall-related command.

In S1123, the ECU 540 repeats until there are no more steps.

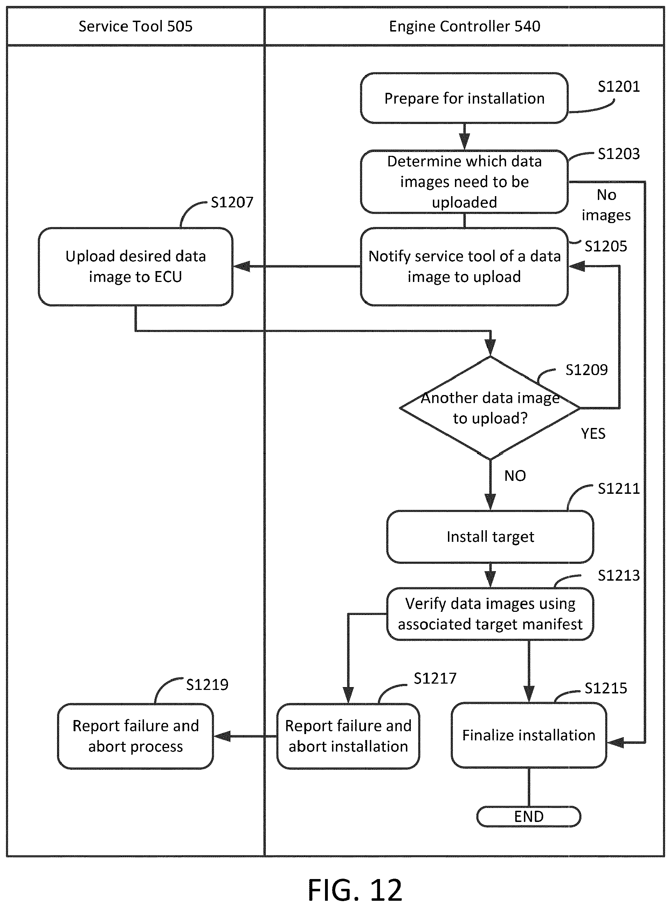

FIG. 12 is a flowchart for a method of processing an install-related command in accordance with an exemplary aspect of the disclosure. In some embodiments, when an install command is executed in the ECU 540, it may be performed as an installation transaction. An installation transaction represents a sequence of steps for installing targets that are packaged together. A transaction may appear as a single atomic action, and a failure of any part of the transaction results in a roll-back of the steps taken thus far.

In S1201, ECU 540 prepares for installation. Preparing for installation may include shutting down application processes and threads from other targets, completing any updates to logs, and completing any remaining communications.

In S1203, ECU 540 determines which data images need to be uploaded. When installing a brand-new target, the list of data images to be uploaded is the same as the list of data images defined in the associated target manifest.

When installing a different version of an existing installed target, the ECU 540 can choose to upload either all data images defined in the associated target manifest, or only those data images whose digests listed in the target manifest are different from the digests of already installed data images.

In S1205, ECU 540 notifies the service tool 505 of a data image to upload.

In S1207, service tool 505 uploads a desired data image.

In S1209, service tool 505 checks for another data image to upload.

In S1211, ECU 540 installs a target. Installation of a new target involves programming a target's data images into the appropriate partition in the ECU's flash memory. Installation of a different version of an already installed target involves first uninstalling from flash memory those data images that are to be replaced or are no longer needed before installing a target's new/revised data images into flash memory.

If a data image has an associated special directive in the target specification, then the ECU 540 uses that directive to determine how best to install the data image. In some embodiments, a directive may indicate where in the flash memory the data image is to reside.

If the ECU 540 determines that the amount of memory in one partition of the flash memory is not sufficient, the ECU 540 may simply abort the installation of the target data image. In some embodiments, the ECU 540 may instead search for a larger partition in the case of a flash memory having different, or adjustable partition sizes. In some embodiments, the ECU 540 may instead install a target data image across more than one partition of the flash memory.

In S1213, ECU 540 verifies data images using associated target manifest. The ECU 540 verifies a data image by first calculating the digest of the uploaded and installed image, then comparing the result to the digest provided in the target manifest.

In S1215, ECU 540 finalizes installation. Finalization of installation includes any necessary cleanup after installation. For example, it may require that the ECU 540 reset power to complete the installation process.

In S1217, ECU 540 reports failure and aborts installation.

In S1219, Service tool 505 reports the failure and aborts processing of the installation.

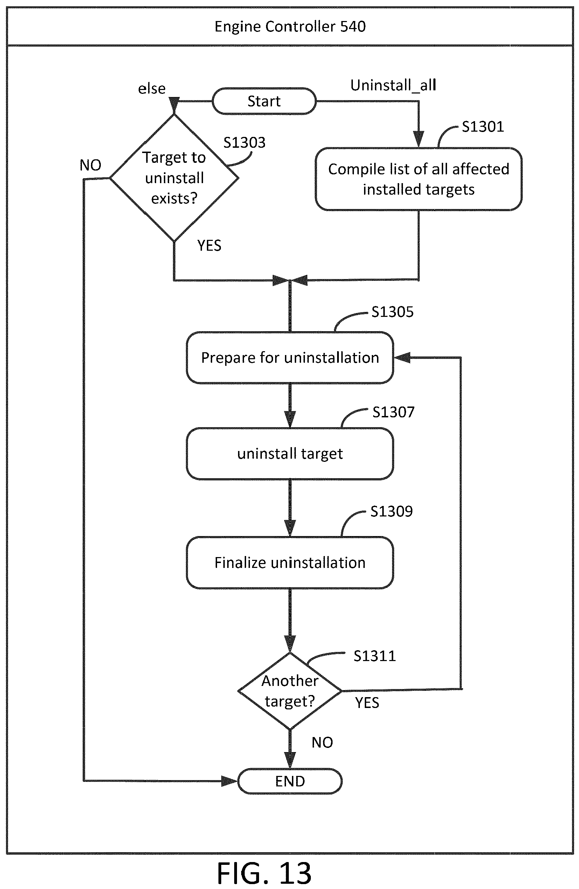

FIG. 13 is a flowchart for a method of processing an uninstall-related command in accordance with an exemplary aspect of the disclosure.

In S1301, when a command to uninstall is received, ECU 540 compiles a list of all affected installed targets. Only targets that permit being uninstalled will appear in the list. Other targets will remain installed.

In S1303, ECU 540 prepares for uninstallation. Preparing for uninstallation may include shutting down application processes and threads, completing any updates to logs, and issuing final communications.

In S1305, ECU 540 uninstalls the target. Uninstalling a target consists of erasing any logs and configurations for applications inside the target, removing the target from the registry of installed targets, and if necessary erasing the target's data image files contained in memory.

In S1307, ECU 540 finalizes uninstallation. Finalization uninstallation includes any necessary cleanup after uninstallation. It may require that the ECU 540 reset power to complete the uninstallation process.

In S1309, the ECU 540 repeats steps S1305- S1309 until all affected targets have been uninstalled.

While aspects of the present disclosure have been particularly shown and described with reference to the embodiments above, it will be understood by those skilled in the art that various additional embodiments may be contemplated by the modification of the disclosed machines, systems and methods without departing from the spirit and scope of what is disclosed. Such embodiments should be understood to fall within the scope of the present disclosure as determined based upon the claims and any equivalents thereof.

## Claims

1. A method of building a package for a plurality of software targets in a flash memory of a controller (540) in a work machine (170), wherein each said software target is identified by a unique identifier, and wherein each said software target includes at least one data image that contains encoded information, the method comprising:
generating, using a file generation circuitry, a target specification file for each of the software targets (S603), wherein the target specification file indicates a command to be performed and the unique identifier of the respective software target;
generating, using a file specification circuitry, a package specification file (S803) that includes at least one work order containing work order information that indicates an installation process for the software targets; and
building, using a package building circuitry, a package (S819) that includes the software targets, the target specification files, and the package specification file.

2. The method according to Claim 1,
wherein, for a first software target of the plurality of software targets the target specification file indicates an uninstall command as the command, the unique identifier of the first software target matching a unique identifier of an existing software target stored in the flash memory, and
wherein, for a second software target of the plurality of software targets the target specification file indicates an install command as the command, the unique identifier of the second software target, and a version of the second software target.

3. The method according to Claim 1, further comprising:
generating, using the file generation circuitry, a target manifest file for each of the software targets (S611), wherein the target manifest file indicates transmission security information for the software target; and
generating, using signing circuitry, a digital signature (S609) for each of the software targets, and storing each said digital signature in respective ones of the target manifest files as the transmission security information.

4. The method according to claim 1, further comprising:
flashing (S1119; S1211), in the flash memory, one of the software targets among the plurality of software targets in accordance with the installation process and the command of said one software target; and
repeating (S1123) said flashing for each said software target of the plurality of software targets in separate partitions of the flash memory based on a respective said command and the installation process.

5. The method according to Claim 4,
wherein the command is an install command (S1211), and
wherein said flashing includes:
determining, using corruption checking circuitry, whether one of the software targets among the plurality of software targets is corrupt by checking a digital signature associated with said one software target (S1213); and
when said one software target is determined to be corrupt, halting said flashing (S1217).

6. The method according to Claim 4,
wherein the work order information indicates an order of installation of the plurality of software targets (S1109), and
wherein said repeating the flashing for each said software target is according to the order of installation (S1117; S1123).

7. The method according to Claim 1,
wherein at least one of the plurality of software targets is program code for a display device (S1005).

8. The method according to Claim 7,
wherein the program code for the display device is for display of information in a natural language (S1005), and
wherein the at least one work order generated in said generating the package specification file indicates the installation process of said at least one software target for display of the information in the natural language (S1007).

9. The method according to Claim 2, further comprising:
extracting a software target from the package (S913);
searching for one of the software targets, of the plurality of software targets, said one software target having been stored in one of the partitions of a plurality of partitions of the flash memory in accordance with the installation process;
comparing a timestamp of the extracted software target and a timestamp of the stored software target (S1213);
when the timestamp of the extracted software target is an earlier time than the timestamp of the stored software target, abort installation of the extracted software target (S1217); and
when the timestamp of the extracted software target is a later time than the timestamp of the stored software target, storing the extracted software target in said one partition (S1215).

10. The method according to Claim 1,
wherein the work order information includes a list of software targets, and
wherein the method further comprises:
displaying, using display circuitry, the list of software targets (S1005); and
selecting, using the display circuitry, software targets from the list of software targets as software targets to be installed (S1005).

11. A method of updating embedded software having multiple software targets in a flash memory having a plurality of partitions, the method of updating embedded software comprising:
receiving, using a processor, an updated target program of the multiple software targets of the embedded software (S601);
generating, using the processor, a target specification file for the updated target program (S603), wherein the target specification file indicates a command to be performed for the updated target program;
generating, using the processor, a target manifest file for the updated target program (S611), wherein the target manifest file indicates transmission security information for the updated target program;
generating, using the processor, a package specification that includes a work order containing work order information indicating an installation process for the updated target program (S803); and
building, using the processor, a package that contains the package specification, the target specification file, the target manifest file, and the updated target program (S819).

12. The method of updating embedded software according to claim 11, further comprising:
extracting the updated target program from the package (S913);
searching for one of the software targets, of the plurality of software targets, to be updated (S921; S1211), said one software target having been stored in one of the partitions of the plurality of partitions of the flash memory in accordance with the installation process; and
storing the updated target program in said one partition (S1211).

13. The method of updating embedded software according to claim 12, further comprising:
determining, using the processor, whether an amount of memory in said one partition is sufficient for a size of the updated target program (S1211); and
when the amount of memory in said one partition is not sufficient for the size of the updated target program, aborting said storing of the updated target program in said one partition (S1217).

14. The method of updating embedded software according to claim 11, further comprising:
determining, using the processor, whether the updated target program requires re-certification.

15. The method of updating embedded software according to claim 11, further comprising:
digitally signing, using the processor, the updated target program (S609);
extracting, using the processor, the digitally signed updated target program from the package (S913); and
checking, using the processor, the digital signature of the extracted updated target program to determine whether the extracted updated target program is corrupt (S915).
